# EUROPEAN PATENT SPECIFICATION

(11) **EP 4 370 001 B1**
(45) Date of publication and mention of the grant of the patent: **07.05.2025**
(21) Application number: 22741513.0
(22) Date of filing: 11.07.2022
(51) Int. Cl.: A47J 31/44

(54) **CONTAINER AND BEVERAGE OR FOODSTUFF PREPARATION SYSTEM COMPRISING THE CONTAINER**
BEHÄLTER UND GETRÄNKE- ODER LEBENSMITTELZUBEREITUNGSSYSTEM MIT SOLCHEM BEHÄLTER
CONTENEUR ET SYSTÈME DE PRÉPARATION DE BOISSON OU D'ALIMENT COMPRENANT LE CONTENEUR

(30) Priority: 16.07.2021 EP 21186135
(43) Date of publication of application: 22.05.2024
(73) Proprietor: Société des Produits Nestlé S.A., 1800 Vevey (CH)
(72) Inventor: YOAKIM, Alfred, 1806 St-Legier-la Chiesaz (CH); MOODIE, Simon, Whaley Bridge, Derbyshire SK23 7HR (GB)
(74) Representative: Navarro Fernández, Maria Isabel
(86) International application number: PCT/EP2022/069310
(87) International publication number: WO 2023/285374

(56) References cited:
- GB-A- 2 569 622
- US-A1- 2016 242 594

## Description

### TECHNICAL FIELD

The present disclosure relates generally to electrically operated beverage or foodstuff preparation systems, with which a beverage or foodstuff is prepared from a pre-portioned capsule.

### BACKGROUND

Systems for the preparation of a beverage comprise a beverage preparation machine and a capsule. The capsule comprises a single-serving of a beverage forming precursor material, e.g. ground coffee or tea. The beverage preparation machine is arranged to execute a beverage preparation process on the capsule, typically by the exposure of pressurized, heated water to said precursor material. Processing of the capsule in this manner causes the at least partial extraction of the precursor material from the capsule as the beverage.

This configuration of beverage preparation machine has increased popularity due to 1) enhanced user convenience compared to a conventional beverage preparation machines (e.g. compared to a manually operated stove-top espresso maker) and 2) an enhanced beverage preparation process, wherein: preparation information encoded by a code on the capsule is read by the machine, and; the preparation information is used by the machine to optimise the preparation process in a manner specific to the capsule. In particular, the encoded preparation information may comprise operating parameters selected in the beverage preparation process, including: fluid temperature; fluid pressure; preparation duration, and; fluid volume.

The capsule includes a storage portion for storing the precursor material; a closing member arranged as membrane to close the storage portion, and; a flange formed with the storage portion presents a surface for connection of the membrane. An example of such a capsule can be seen in GB-A-2 569 622. The code is printed to a lower surface of the flange, however the printing process directly onto the flange can be complex. Moreover, the code when exposed on the lower surface of the flange can be subject to damage and/or soiling that could affect its readability.

Therefore, in spite of the effort already invested in the development of said systems further improvements are desirable.

### SUMMARY

The present disclosure provides a container for containing a precursor material for use with a machine for preparing a beverage or foodstuff or a precursor thereof according to claim 1. The container includes: a storage portion, for storage of precursor material, the storage portion having an opening for receiving the precursor material; a closing member (e.g. a membrane) for closing the opening of the storage portion; a flange for connecting the storage portion and closing member, and; a code carrying member. The flange comprises a viewing window, and the code carrying member is arranged to extend over the viewing window at a side of the flange that comprises an upper surface of the flange. The code of the code carrying member is arranged on a flange facing surface of the code carrying member, such that the code is readable from a side of the flange that comprises a lower surface of the flange through the viewing window.

By arranging the code not to be on the flange (e.g. on an underside of the flange) but to be on a separate code carrying member that is visible through the viewing window of the flange, the code is advantageously set back from the underside of the flange and may avoid damage. Moreover, the code may be more conveniently formed since it can be printed on the code carrying member in 2-dimmensions rather than on the 3-dimmensional storage portion and integrated flange.

In embodiments, the code stores preparation information for use with a preparation process performed by said machine, in which the machine is controlled based on the preparation information to prepare the beverage and/or foodstuff or precursor thereof. In embodiments, the code comprises a plurality of elements, the elements encoding a data portion storing the preparation information, and encoding a finder sequence for locating the data portion.

In embodiments, the closing member and the code carrying member are integrally formed. By forming the code on the closing member, e.g. the membrane, the code may be conveniently displayed through the viewing window when the membrane is connected to the flange.

Examples of suitable membranes can be derived from the teachings disclosed herein and examples relating to the containers and/or closing members. Suitable constructional and/or operational details are for instance disclosed in EP2569230.

In embodiments, the code carrying member is arranged as an insert. By arranging the code on an insert separate to the closing member, the code may be precisely aligned in position with the viewing window before the membrane is connected to the flange.

In embodiments, the viewing window is formed as one or more cut-outs. By implementing cut-outs, e.g. though hole perforations in the flange, the visibility of the code from the lower surface may not be impeded by any medium.

In embodiments, the or each cut-out is adjoined by a connecting member that interconnects a peripheral rim of the flange to an interior edge of the flange. The connecting member defines the a radially extending boundary of the cut-out and secures the peripheral rim of the flange to the interior edge of the flange, which is connected to the storage portion.

In embodiments, the connecting member forms a portion of the code. By implementing the connecting member to form a portion of the code, e.g. it may be used as part of the finder sequence, and may be shaped and coloured as one of the elements of the finder sequence, the connecting member does not interrupt the code.

In embodiments, the closing member is adhered to the flange radially inwards of the or each cut-out. By connecting (e.g. by an adhesive) the closing member to the flange on the storage portion side of the cut-outs a hermetic seal may be maintained in spite of the cut-out.

In embodiments, the viewing window comprises an at least partially transparent member. By implementing a transparent member, e.g. a Perspex or other clear material, the code may be viewed through said material. In this way a cut-out which may compromise hermitic sealing of the flange is obviated.

In embodiments, the entire flange is formed from the at least partially transparent member. By forming the entire flange of the transparent member, the transparent member may be more conveniently formed, e.g. rather than just as discrete viewing windows which may otherwise interrupt reading of the code.

In embodiments, the flange and storage portion are integrally formed of the same material. By implementing the flange and storage portion of the transparent material, separate viewing window formations are obviated.

The present disclosure provides a system comprising the container of any preceding embodiment or another embodiment disclosed herein and a machine for preparing a beverage and/or foodstuff or a precursor thereof.

In embodiments, the machine includes: a code reading system to read the code of the container; a processing unit for processing the precursor material of the container, and; electrical circuitry to control the processing unit based on preparation information read from the code. In embodiments, the processing unit includes a container processing unit and a fluid processing system, and; the electrical circuitry is arranged to control the container processing unit and fluid processing system based on the preparation information read from the code. In embodiments, the processing unit is arranged as a loose material processing unit, and; the electrical circuitry is arranged to control the loose material processing unit to process loose precursor material dispensed from the container or arranged in the container based on the preparation information read from the code. In embodiments, the code reading system is arranged to read the code as the container is rotated about an axis of rotation, and the processing unit is arranged to process the precursor material as the container is rotated about said axis of rotation. Code reading and precursor material processing may be executed concurrently or consecutively.

The present disclosure provides use of the container of any preceding embodiment or another embodiment disclosed herein for a machine for preparing a beverage and/or foodstuff or a precursor thereof.

The present disclosure provides, a method of arranging a code on a container for containing a precursor material for use with a machine for preparing a beverage and/or foodstuff according to claim 12. The method comprises: arranging a code carrying member on a side of a flange that comprises an upper surface of the flange that interconnects a storage portion and a closing member, such that the code is readable from a side of the flange that comprises a lower surface of the flange through a viewing window in the flange.

In embodiments, the method comprises forming the code on the closing member prior to connecting the closing member to the storage portion.

In embodiments, the method comprising forming the code on an insert before arranging the insert on the side of the a flange that comprises an upper surface of the flange.

The method may implement the features of any preceding embodiment, or another embodiment disclosed herein.

The present disclosure provides a container formed by the method of any preceding embodiment, or another embodiment disclosed herein.

The preceding summary is provided for purposes of summarizing some embodiments to provide a basic understanding of aspects of the subject matter described herein. Accordingly, the above-described features are merely examples and should not be construed to narrow the scope of the invention as defined by the appended claims.

Other features, aspects, and advantages of the subject matter described herein will become apparent from the following Detailed Description of Embodiments, Brief Description of Figures, and Claims.

### BRIEF DESCRIPTION OF FIGURES

Aspects, features and advantages of embodiments of the present disclosure will become apparent from the following detailed description of embodiments in reference to the appended drawings in which like numerals denote like elements.
Figure 1 is a block system diagram showing an embodiment system for preparation of a beverage or foodstuff or a precursor thereof.
Figure 2 is a block system diagram showing an embodiment machine of the system of figure 1.
Figure 3 is an illustrative diagram showing an embodiment fluid conditioning system of the machine of figure 2.
Figures 4A and 4B and 5 are illustrative diagrams showing a container processing system of the machine of figure 2, that does not fall under the scope of the claims.
Figure 6 is an illustrative diagram showing an embodiment machine of figure 2, which comprises a loose material processing unit.
Figure 7 is a block diagram showing embodiment control electrical circuitry of the machine of figure 2.
Figure 8 is an illustrative diagram showing embodiment container of the system of figure 1.
Figure 9 is flow diagram showing an embodiment preparation process, which is performed by the system of figure 1.
Figure 10 is a magnified view showing a code of the container of figure 8.
Figures 11 is a magnified view showing a flange and a closing member of the container of figures 8 and 10.
Figures 12 is a plan view showing the container of figures 8, 10 and 11.

### DETAILED DESCRIPTION OF EMBODIMENTS

Before describing several embodiments of the system, it is to be understood that the system is not limited to the details of construction or process steps set forth in the following description. It will be apparent to those skilled in the art having the benefit of the present disclosure that the system is capable of other embodiments and of being practiced or being carried out in various ways.

The present disclosure may be better understood in view of the following explanations:
As used herein, the term **"machine"** may refer to an electrically operated device that: can prepare, from a precursor material, a beverage and/or foodstuff, or; can prepare, from a pre-precursor material, a precursor material that can be subsequently prepared into a beverage and/or foodstuff. The machine may implement said preparation by one or more of the following processes: dilution; heating; cooling; mixing; whisking; dissolution; soaking; steeping; extraction; conditioning; infusion; grinding, and; other like process. The machine may be dimensioned for use on a work top, e.g. it may be less than 70 cm in length, width and height. As used herein, the term **"prepare"** in respect of a beverage and/or foodstuff may refer to the preparation of at least part of the beverage and/or foodstuff (e.g. a beverage is prepared by said machine in its entirety or part prepared to which the end-user may manually add extra fluid prior to consumption, including milk and/or water).

As used herein, the term **"container"** may refer to any configuration to contain the precursor material, e.g. as a single-serving, pre-portioned amount. The container may have a maximum capacity such that it can only contain a single-serving of precursor material. The container may be single use, e.g. it is physically altered after a preparation process, which can include one or more of: perforation to supply fluid to the precursor material; perforation to supply the beverage/foodstuff from the container; opening by a user to extract the precursor material. The container is configured for operation with a container processing unit of the machine, it includes a flange for alignment and directing the container through or arrangement on said unit. The container may include a rupturing portion, which is arranged to rupture when subject to a particular pressure to deliver the beverage/foodstuff. The container has a closing member, e.g. a membrane, for closing the container. The container may have various forms, including one or more of: frustoconical; cylindrical; disk; hemispherical; packet; other like form. The container may be formed from various materials, such as metal or plastic or a combination thereof. The material may be selected such that it is: food-safe; it can withstand the pressure and/or temperature of a preparation process. The container may be defined as a capsule, wherein a capsule may have an internal volume of 20 - 100 ml. The capsule includes a coffee capsule, e.g. a Nespresso^{®} capsule (including a Classic, Professional, Vertuo, Dolce Gusto or other capsule). The container may be defined as a receptacle, wherein a receptacle may have an internal volume of 150 - 350 ml. The receptacle is typically for end user consumption therefrom, and includes a pot, for consumption via an implement including a spoon, and a cup for drinking from. The container may be defined as a packet, wherein the packet is formed from a flexible material, including plastic or foil. A packet may have an internal volume of 150 - 350 ml or 200 - 300 ml or 50 - 150 ml.

As used herein, the term **"external device"** or **"external electronic device"** or **"peripheral device"** may include electronic components external to the machine, e.g. those arranged at a same location as the machine or those remote from the machine, which communicate with the machine over a computer network. The external device may comprise a communication interface for communication with the machine and/or a server system. The external device may comprise devices including: a smartphone; a PDA; a video game controller; a tablet; a laptop; or other like device.

As used herein, the term **"server system"** may refer to electronic components external to the machine, e.g. those arranged at a remote location from the machine, which communicate with the machine over a computer network. The server system may comprise a communication interface for communication with the machine and/or the external device. The server system can include: a networked-based computer (e.g. a remote server); a cloud-based computer; any other server system.

As used herein, the term **"system"** or **"beverage or foodstuff preparation system"** refers to the combination of the beverage or foodstuff preparation machine and the container, optionally either one or more of: the server system, and; the peripheral device.

As used herein, the term **"beverage"** may refer to any substance capable of being processed to a potable substance, which may be chilled or hot. The beverage may be one or more of: a solid; a liquid; a gel; a paste. The beverage may include one or a combination of: tea; coffee; hot chocolate; milk; cordial; vitamin composition; herbal tea/infusion; infused/flavoured water, and; other substance. As used herein, the term **"foodstuff"** may refer to any substance capable of being processed to a nutriment for eating, which may be chilled or hot. The foodstuff may be one or more of: a solid; a liquid; a gel; a paste. The foodstuff may include: yoghurt; mousse; parfait; soup; ice cream; sorbet; custard; smoothies; other substance. It will be appreciated that there is a degree of overlap between the definitions of a beverage and foodstuff, e.g. a beverage can also be a foodstuff and thus a machine that is said to prepare a beverage or foodstuff does not preclude the preparation of both.

As used herein, the term **"precursor material"** may refer to any material capable of being processed to form part or all of the beverage or foodstuff. The precursor material can be one or more of a: powder; crystalline; liquid; gel; solid, and; other. Examples of a beverage forming precursor material include: ground coffee; milk powder; tea leaves; coco powder; vitamin composition; herbs, e.g. for forming a herbal/infusion tea; a flavouring, and; other like material. Examples of a foodstuff forming precursor material include: dried vegetables or stock as anhydrous soup powder; powdered milk; flour based powders including custard; powdered yoghurt or ice-cream, and; other like material. A precursor material may also refer to any pre-precursor material capable of being processed to a precursor material as defined above, i.e. any precursor material that can subsequently be processed to a beverage and/or foodstuff. In an example, the pre-precursor material includes coffee beans which can be ground and/or heated (e.g. roasted) to the precursor material.

As used herein, the term **"fluid"** (in respect of fluid supplied by a fluid conditioning system) may include one or more of: water; milk; other. As used herein, the term **"conditioning"** in respect of a fluid may refer to a change in a physical property thereof and can include one or more of the following: heating or cooling; agitation (including frothing via whipping to introduce bubbles and mixing to introduce turbulence); portioning to a single-serving amount suitable for use with a single serving container; pressurisation e.g. to a brewing pressure; carbonating; fliting/purifying, and; other conditioning process.

As used herein, the term **"processing unit"** may refer to an arrangement that can process precursor material to a beverage or foodstuff. It may refer to an arrangement that can process a pre-precursor material to a precursor material. The processing unit may have any suitable implementation, including a container processing unit or a loose material processing unit.

As used herein, the term **"container processing unit"** may refer to an arrangement that can process a container to derive an associated beverage or foodstuff from a precursor material. The container processing unit may be arranged to process the precursor material by one of more of the following: dilution; heating; cooling; mixing; whisking; dissolution; soaking; steeping; extraction; conditioning; pressurisation; infusion, and: other processing step. The container processing unit may therefore implement a range of units depending on the processing step, which can include: an extraction unit (which may implement a pressurised and/or a thermal, e.g. heating or cooling, brewing process); a mixing unit (which mixes a beverage or foodstuff in a receptacle for end user consumption therefore; a dispensing and dissolution unit (which extracts a portion of the precursor material from a repository, processes by dissolution and dispenses it into a receptacle), and: other like unit.

As used herein, the term **"loose material processing unit"** may refer to an arrangement that can process loose material of a pre-precursor material to a precursor material. The loose material processing unit may be arranged to process the pre-precursor material by one of more of the following: heating; cooling; grinding; mixing; soaking; conditioning; other processing step. The loose material may be supplied to the loose material processing unit in a container, from which it is extracted and processed.

As used herein, the term **"preparation process"** may refer to a process to prepare a beverage or foodstuff from a precursor material or to prepare a pre-precursor material from precursor material. A preparation process may refer to the processes electrical circuitry executes to control the container processing unit to process said precursor or pre-precursor material.

As used herein, the term **"electrical circuitry"** or **"circuitry"** or **"control electrical circuitry"** may refer to one or more hardware and/or software components, examples of which may include: an Application Specific Integrated Circuit (ASIC); electronic/electrical componentry (which may include combinations of transistors, resistors, capacitors, inductors etc); one or more processors; a non-transitory memory (e.g. implemented by one or more memory devices), that may store one or more software or firmware programs; a combinational logic circuit; interconnection of the aforesaid. The electrical circuitry may be located entirely at the machine, or distributed between one or more of: the machine; external devices; a server system.

As used herein, the term **"processor"** or **"processing resource"** may refer to one or more units for processing, examples of which include an ASIC, microcontroller, FPGA, microprocessor, digital signal processor (DSP), state machine or other suitable component. A processor may be configured to execute a computer program, e.g. which may take the form of machine readable instructions, which may be stored on a non-transitory memory and/or programmable logic. The processor may have various arrangements corresponding to those discussed for the circuitry, e.g. on-board machine or distributed as part of the system. As used herein, any machine executable instructions, or computer readable media, may be configured to cause a disclosed method to be carried out, e.g. by the machine or system as disclosed herein, and may therefore be used synonymously with the term method, or each other.

As used herein, the term **"computer readable medium/media"** or **"data storage"** may include any medium capable of storing a computer program, and may take the form of any conventional non-transitory memory, for example one or more of: random access memory (RAM); a CD; a hard drive; a solid state drive; a memory card; a DVD. The memory may have various arrangements corresponding to those discussed for the circuitry.

As used herein, the term **"communication resources"** or **"communication interface"** may refer to hardware and/or firmware for electronic information transfer. The communication resources/interface may be configured for wired communication ("wired communication resources/interface") or wireless communication ("wireless communication resources/interface"). Wireless communication resources may include hardware to transmit and receive signals by radio and may include various protocol implementations e.g. the 802.11 standard described in the Institute of Electronics Engineers (IEEE) and Bluetooth^{™} from the Bluetooth Special Interest Group of Kirkland Wash. Wired communication resources may include; Universal Serial Bus (USB); High-Definition Multimedia Interface (HDMI) or other protocol implementations. The machine may include communication resources for wired or wireless communication with an external device and/or server system.

As used herein, the term **"network"** or **"computer network"** may refer to a system for electronic information transfer between a plurality of apparatuses/devices. The network may, for example, include one or more networks of any type, which may include: a Public Land Mobile Network (PLMN); a telephone network (e.g. a Public Switched Telephone Network (PSTN) and/or a wireless network); a local area network (LAN); a metropolitan area network (MAN); a wide area network (WAN); an Internet Protocol Multimedia Subsystem (IMS) network; a private network; the Internet; an intranet.

As used herein, the term **"code"** may refer to storage medium that encodes preparation information. The code may be an optically readable code, e.g. a bar code. The code may be formed of a plurality of units, which can be referred to as elements or markers.

As used herein, the term **"preparation information"** may refer to information related to a preparation process. Depending on the implementation of the processing unit said information may vary. The parameters that may be associated container processing unit that comprises a fluid processing system, can include one or more of: fluid pressure; fluid temperature; mass/volumetric flow rate; fluid volume; filtering/purification parameters for the fluid; carbonation parameters for the fluid. The parameters that may be associated container processing unit that comprises a loose material processing unit, can include one or more of: grinding parameters, including intensity; heating temperature. More general parameters can include one or more: container geometric parameters, e.g. shape or volume; the type of precursor; phase identifier, for when a preparation process is split into a series of phases, whereby each phase comprises a set of one or more of any of the aforesaid parameters; duration, including phase duration (e.g. a duration for applying the parameters of a phase or any of the aforementioned parameters generally; and a container identifier, which may for example be used to monitor container consumption for the purpose of container re-ordering or look-up of information from the server system; an expiry date, a recipe identifier, which may be used to lookup a recipe stored on the memory of the machine for use with the container.

### [General system description]

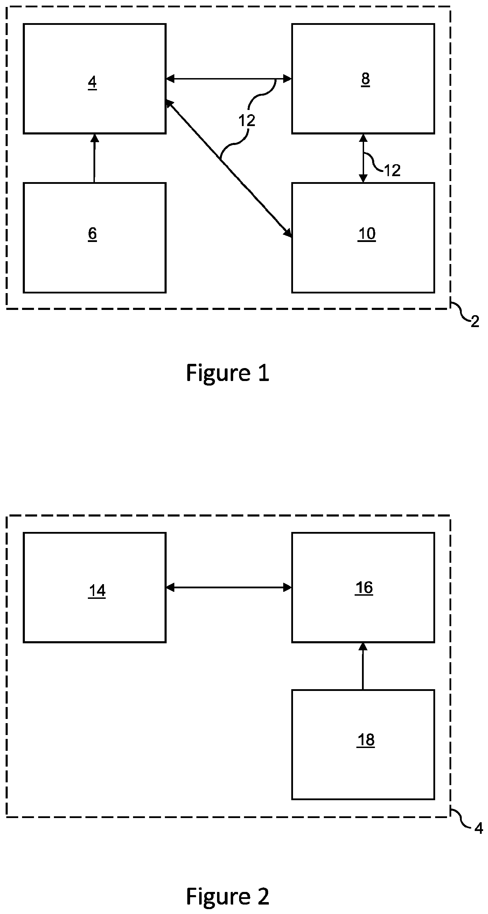

Referring to figure 1, the system **2** comprises a machine **4,** a container **6,** server system **8** and a peripheral device **10.** The server system **8** is in communication with the machine **4** via a computer network **12.** The peripheral device **10** is in communication with the machine **4** via the computer network **12.**

In variant embodiments, which are not illustrated: the peripheral device and/or server system is omitted.

Although the computer network **12** is illustrated as the same between the machine **4,** server system **8** and peripheral device **10,** other configurations are possible, including: a different computer network for intercommunication between each device: the server system communicates with the machine via the peripheral device rather than directly. In a particular example: the peripheral device communicates with the machine via a wireless interface, e.g. with a Bluetooth^{™} protocol, and; the server system communicates with the machine via a via a wireless interface, e.g. with a IEE 802.11 standard, and also via the internet.

### [Machine]

Referring to figure 2, the machine **4** comprises: a processing unit **14** for processing the precursor material; electrical circuitry **16,** and; a code reading system **18.**

The electrical circuitry **16** controls the code reading system **18** to read a code (not illustrated in figure 2) from the container **6** and determine preparation information therefrom. The electrical circuitry **16** uses the preparation information to control the processing unit **14** to execute a preparation process, in which the precursor material is process to a beverage or foodstuff or a precursor thereof.

### [First example of Processing unit]

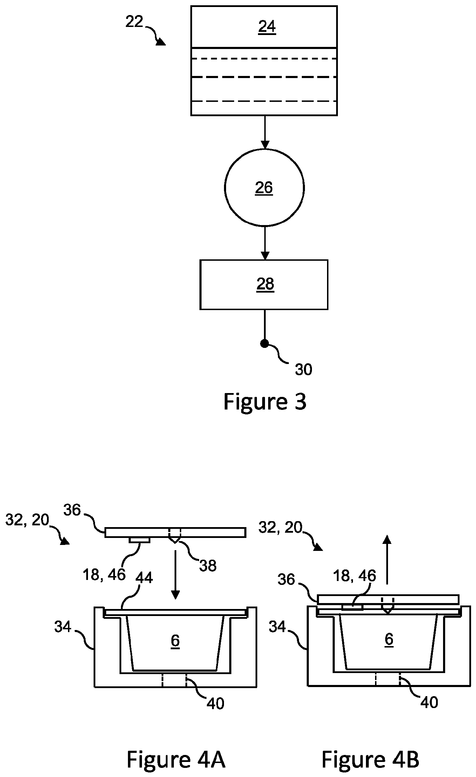

Referring to figures 2 and 3, in a first example of the processing unit **14,** said unit comprises a container processing unit **20** and a fluid conditioning system **22.**

The container processing unit **20** is arranged to process the container **6** to derive a beverage or foodstuff from precursor material (not illustrated) therein. The fluid conditioning system **22** conditions fluid supplied to the container processing unit **20.** The electrical circuitry **16** uses the preparation information read from the container **6** to control the container processing unit **20** and the fluid conditioning system **22** to execute the preparation process.

### [Fluid conditioning system]

Referring to figure 3, the fluid conditioning system **22** includes a reservoir **24;** pump **26;** heat exchanger **28,** and; an outlet **30** for the conditioned fluid. The reservoir **24** contains fluid, typically sufficient for multiple preparation processes. The pump **26** displaces fluid from the reservoir **24,** through the heat exchanger **26** and to the outlet **30** (which is connected to the container processing unit **20).** The pump **26** can be implement as any suitable device to drive fluid, including: a reciprocating; a rotary pump; other suitable arrangement. The heat exchanger **28** is implemented to heat the fluid, and can include: an in-line, thermo block type heater; a heating element to heat the fluid directly in the reservoir; other suitable arrangement.

In variant embodiments, which are not illustrated: the pump is omitted, e.g. the fluid is fed by gravity to the container processing unit or is pressurised by a mains water supply; the reservoir is omitted, e.g. water is supplied by a mains water supply; the heat exchanger is arranged to cool the fluid, e.g. it may include a refrigeration-type cycle heat pump); the heat exchanger is omitted, e.g. a mains water supply supplies the water at the desired temperature; the fluid conditioning system includes a filtering/purification system, e.g. a UV light system, a degree of which that is applied to the fluid is controllable; a carbonation system that controls a degree to which the fluid is carbonated.

### [Container processing unit]

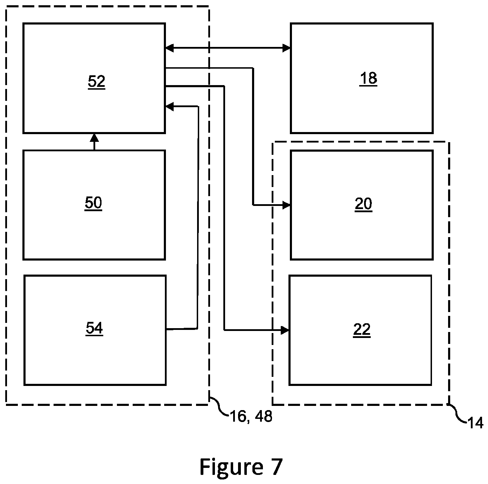

The container processing unit **20** can be implemented with a range of configurations, as illustrated in examples 1 - 6 below:
Referring to figures 4A and 4B, a first example that does not fall under the scope of the claims is shown, wherein the container processing unit **20** is for processing of a container arranged as a capsule **6** (a suitable example of a capsule is provided in figure 7, which will be discussed) to prepare a beverage. The container processing unit **20** is configured as an extraction unit **32** to extract the beverage from the capsule **6.** The extraction unit **32** includes a capsule holding portion **34** and a closing portion **36.** The extraction unit **32** is movable to a capsule receiving position (figure 4A), in which capsule holding portion **34** and a closing portion **36** are arrange to receive a capsule 6. The extraction unit **32** is movable to a capsule extraction position (figure 4B), in which the capsule holding portion **34** and a closing portion **36** form a seal around a capsule **6,** and the beverage can be extracted from the capsule **6.** The extraction unit **32** can be actuator driven or manually movable between said positions.

The outlet **30** of the fluid conditioning system **22** is arranged as an injection head **38** to inject the conditioned fluid into the capsule **6** in the capsule extraction position, typically under high pressure. A beverage outlet **40** is arranged to capture the extracted beverage and convey it from the extraction unit **32.**

The extraction unit **32** is arranged to prepare a beverage by the application of pressurised (e.g. at 10 - 20 Bar), heated (e.g. at 50 - 98 degrees C) fluid to the precursor material within the capsule **6.** The pressure is increased over a predetermined amount of time until a pressure of a rupturing portion (not illustrated in figure 4A, 4B) of the capsule **6** is exceeded, which causes rupture of said portion and the beverage to be dispensed to the beverage outlet **40.**

In variant embodiments, which are not illustrated, although the injection head and beverage outlet are illustrated as arranged respectively on the closing portion and capsule holding portion, they may be alternatively arranged, including: the injection head and beverage outlet are arranged respectively on the capsule holding portion and closing portion; or both on the same portion. Moreover, the extraction unit may include both parts arranged as a capsule holding portion, e.g. for capsules that are symmetrical about the flange, including a Nespresso^{®} Professional capsule.

Examples of suitable extraction units are provided in EP 1472156 A1 and in EP 1784344 A1, which provide a hydraulically sealed extraction unit.

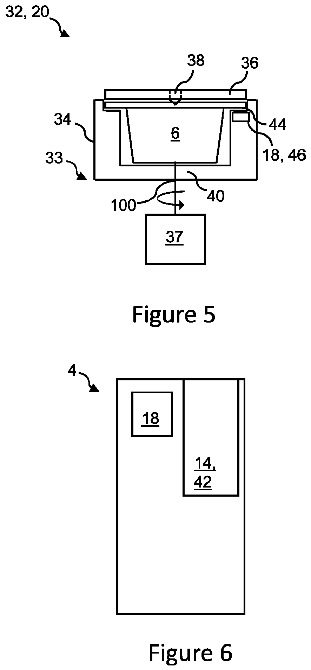

Referring to figure 5, in a second example of the container processing unit **20,** the extraction unit **32** is as described for the first example, however the extraction unit **32** operates at a lower fluidic pressure and by centrifugation. In particular, the extraction unit **32** includes a rotation mechanism **33** that includes a capsule holing portion **34** to hold the capsule **6** and a drive system **37** to rotate said capsule holder **35.**

The outlet **30** of the fluid conditioning system **22** is arranged as on the closing portion **36** as an injection head **38** to inject the conditioned fluid into a centre of the capsule **6** through a closing member of the capsule **6** as will be discussed. The rotation mechanism **33** rotates the capsule to effect transmission of the conditioned fluid radially outwards through precursor material in the capsule **6** and out through peripheral arranged puncture points (not illustrated) in the closing member. An example of a suitable capsule is a Nespresso^{®} Vertuo capsule. A suitable example is provided in EP 2594171 A1.

In a third example, (which is not illustrated) the capsule processing unit operates by dissolution of a beverage precursor that is selected to dissolve under high pressure and temperature fluid. The arrangement is similar to the extraction unit of the first and second example, however the pressure is lower and therefore a sealed extraction unit is not required. In particular, fluid can be injected into a lid of the capsule and a rupturing portion is located in a base of a containment portion of the capsule. An example of a suitable capsule is a Nespresso^{®} Dolce Gusto capsule. Examples of suitable extraction units are disclosed in EP 1472156 A1 and in EP 1784344 A1.

In a fifth example, (which is not illustrated) the container processing unit is arranged as a mixing unit to prepare a beverage or foodstuff precursor that is stored in a container that is a receptacle, which is for end user consumption therefrom. The mixing unit comprises an agitator (e.g. planetary mixer; spiral mixer; vertical cut mixer) to mix and a heat exchanger to heat/cool the beverage or foodstuff precursor in the receptacle. A fluid supply system may also supply fluid to the receptacle. An example of such an arrangement is provided in WO 2014067987 A1.

In a sixth example, (which is not illustrated) the container processing unit is arranged as a dispensing and dissolution unit. The dispensing and dissolution unit is arranged to extract a single serving portion of beverage or foodstuff precursor from a storage portion of the machine (which can include any multi-portioned container including a packet or box). The dispensing and dissolution unit is arranged to mix the extracted single serving portion with the conditioned fluid from the fluid conditioning system, and to dispense the beverage or foodstuff into a receptacle.

### [Second example of Processing unit]

Referring to figure 6, in a second example of the processing unit **14,** said unit comprises a comprises a loose material processing unit **42.**

The loose material processing unit **42** is arranged to receive loose pre-precursor material from a container **6** and to process the pre-precursor material to derive the precursor material. The electrical circuitry **16** uses the preparation information read from the container **6** to control the loose material processing unit **42** to execute the preparation process.

A user presents manually the container **6** to a code reading system **18,** of the machine **4,** to read the code. The user then opens the container **6** and dispenses the pre-precursor material (not illustrated) arranged therein into the loose material processing unit **42.** The loose material processing unit **42** processes the loose pre-precursor material to the precursor material.

In a particular example, the pre-precursor material is coffee beans, and the loose material processing unit **42** is arranged to roast and/or grind the coffee beans to provide a precursor material.

In variant embodiments, which are not illustrated, the loose material processing unit is alternatively configured, including: with a dispensing system to open and dispense the pre-precursor from the capsule for subsequent processing (e.g. it may include a cutting tool to cut open the container and an extractor such as a scop to extract the pre-precursor material); the pre-precursor material may be processed in the container and either dispensed from the container by the aforedescribed example or provided to a user in the container.

### [Code reading system]

Referring to figures 4A and 4B, which do not fall under the scope of the claims, the code reading system **18** is arranged to read a code **44** arranged on a closing member of the container **6.** The code reading system **18** is integrated with the extraction unit **32** of first example of the container processing unit **20.** The code **44** is read with the extraction unit **32** in the capsule extraction position (as shown in figure 4B).

The code reading system **18** includes an image capturing unit **46** to capture a digital image of the code **44.** Examples of a suitable image capturing unit **46** include a Sonix SN9S102; Snap Sensor S2 imager; an oversampled binary image sensor; other like system.

The electrical circuitry **16** includes image processing circuitry (not illustrated) to identify the code in the digital image and extract preparation information. An example of the image processing circuitry is a Texas Instruments TMS320C5517 processor running a code processing program.

Referring to figure 5, the code reading system **18** is arranged to read a code **44** from an underside of a flange of the container **6.** The code **44** is read based on rotation of the code **44** relative a code reader **46** of the code reading system **18.** The code **44** is read with the extraction unit **32** in the capsule extraction position (as shown in figure 5), with the rotation mechanism **33** rotating the container **6.**

The code reading system **18** includes a code reader **46** to capture a code signal of the code **44.** Examples of a suitable image code reader **46** include a photo diode or other electrical componentry that can distinguish between dark an light elements of the code. In variant embodiments, which are not illustrated, the code reader can be implemented as the image capturing unit, as discussed above, or with another suitable reading system.

In variant embodiments, which are not illustrated, the code reading system is separate from the container processing unit including: it is arranged in a channel that the user places the container in and that conveys the container to the container processing unit; it is arranged to read a code on a receptacle, which is positioned to receive a beverage from an beverage outlet of a dispensing and dissolution unit. In further variant embodiments, which are not illustrated, the code reading system is alternatively implemented, e.g. the code reading system is arranged on the machine to read a code of a container that a user manually presents to the image capturing device.

### [Control electrical circuitry]

Referring to figure 7, the electrical circuitry **16** is implemented as control electrical circuitry **48** to control the processing unit **14** to execute a preparation process. In the embodiment of figure 7, for illustrative purposes, the processing unit **14** is exemplified as the first example, which comprises a container processing unit **20** and a fluid supply unit **22.**

The electrical circuitry **16, 48** at least partially implements (e.g. in combination with hardware) an: input unit **50** to receive an input from a user confirming that the machine **4** is to execute a preparation process; a processor **52** to receive the input from the input unit **46** and to provide a control output to the processing unit **14,** and; a feedback system **54** to provide feedback from the processing unit **54** during the preparation process, which may be used to control the preparation process.

The input unit **50** is implemented as a user interface, which can include one or more of: buttons, e.g. a joystick button or press button; joystick; LEDs; graphic or character LDCs; graphical screen with touch sensing and/or screen edge buttons; other like device; a sensor to determine whether a container has been supplied to the machine by a user.

The feedback system **54** can implement one or more of the following or other feedback control based operations:
a flow sensor to determine a flow rate/volume of the fluid to the outlet **30** (shown in figure 3) of the fluid supply system **22,** which may be used to meter the correct amount of fluid to the container **6** and thus regulate the power to the pump **26;**
a temperature sensor to determine a temperature of the fluid to the outlet **30** of the fluid supply unit **22,** which may be used to ensure the temperature of fluid to the container **6** is correct and thus regulate the power to the heat exchanger **28)**;
a level sensor to determine a level of fluid in the reservoir **24** as being sufficient for a preparation process;
a position sensor to determine a position of the extraction unit **32** (e.g. a capsule extraction position or a capsule receiving position).

It will be understood that the electrical circuitry **16, 44** is suitably adapted for the other examples of the processing unit **14,** e.g.: for the second example of the container processing system the feedback system may be used to control speed of rotation of the capsule; for the loose material processing unit the feedback system may be used to implement control of grinding rate and/or a heating temperature.

### [Container]

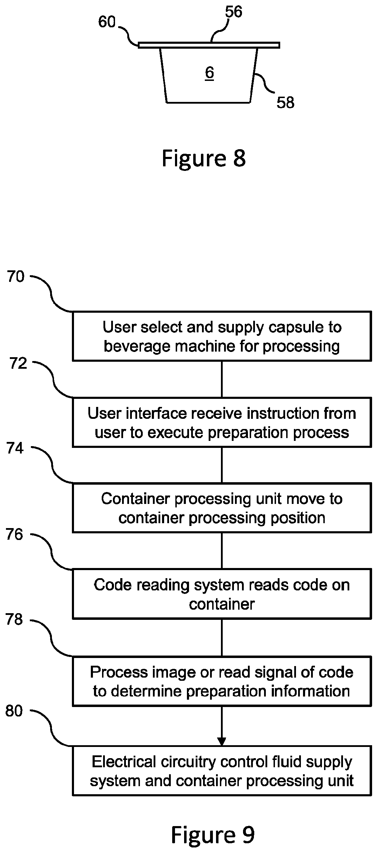

Referring to figure 8, an example of a container **6,** that is for use with the first example or second example of the processing unit **14** comprises the container **6** arranged as a capsule. The capsule includes: a closing member **56;** a storage portion **58,** and; a flange portion **60.**

The storage portion **58** includes a cavity for storage of the precursor material (not illustrated). The closing member **56** closes the storage portion **58** and comprises a flexible membrane. The flange portion **60** is arranged integrally with the storage portion **58** and presents a flat surface for connecting the closing member **56** to the storage portion **58** to hermetically seal the precursor material. The capsule **6** has a diameter of 2 - 5 cm and an axial length of 2 - 4 cm.

In variant embodiments, which are not illustrated, the container can have various shapes including: hemispherical; curved; rectangular in section; frustoconical, and; other like shapes. The closing member may be arranged as a rigid member, rather than a membrane. The flange may be connected to the storage portion, hence as separate components.

Suitable examples of containers and/or closing members in terms of shapes, dimensions and/or materials are know from any of the cartridges, capsules and pods for portioned flavouring ingredients used by Nespresso^{™} (Original Line, Professional Line, Vertuo Line) and Nestle Dolce Gusto^{™} and Nestle Special-T^{™}. The materials may thus include metal, for instance aluminium, plastic and/or paper. The materials are preferably biodegradable and/or recyclable. Suitable use, e.g. extraction, processes and systems are also known from Nespresso^{™}, Nestle Dolce Gusto^{™} or Nestle Special-T^{™}.

Constructional, manufacturing and/or (beverage) extraction details of containers and/or closing members are for instance disclosed in EP 2155021, EP 2316310, EP 2152608, EP2378932, EP2470053, EP2509473, EP2667757 and EP 2528485.

### [Arrangement of Code]

Referring to figure 8, the code **44** code is arranged on an exterior surface of the container 6 such that it can be read by the code reading system 18 through a viewing window from a side of the flange that comprises a lower surface of the flange, the lower surface being arranged at a greater depth than the upper surface of the flange, in the depth direction of extension of the storage portion.

Referring to figure 8, the code **44** (not illustrated in figure 8) may be arranged on the closing member 56.

### [Preparation Process]

Referring to figure 9, the execution of a process for preparing a beverage/foodstuff from precursor material is illustrated:
**Block 170:** a user supplies a container **6** to the machine **4.**
**Block 172:** the electrical circuitry **16** (e.g. the input unit **50** thereof) receives a user instruction to prepare a beverage/foodstuff from precursor, and the electrical circuitry **16** (e.g. the processor **52)** initiates the process.
**Block 174:** the electrical circuitry **16** controls the processing unit **14** to process the container (e.g. in the first or second example of the container processing unit **20,** the extraction unit **32** is moved from the capsule receiving position (figure 4A) to the capsule extraction position (figure 4B, figure 5)).
**Block 176:** the electrical circuitry **16** controls the code reading system **18** to read the code **44** on the container **6** and provide a digital image of the code or an code signal related to the code.
**Block 178:** the code processing circuitry of the electrical circuitry **16** processes the digital image to or code signal extract the preparation information.
**Block 180:** the electrical circuitry **16,** based on the preparation information, executes the preparation process by controlling the processing unit **14.** In the first example of the processing unit this comprises: controlling the fluid conditioning system **22** to supply fluid at a temperature, pressure, and time duration specified in the preparation information to the container processing unit **20.**

The electrical circuitry **16** subsequently controls the container processing unit **20** to move from the capsule extraction position though the capsule ejection position to eject the container **6** and back to the capsule receiving position.

In variant embodiments, which are not illustrated: the above blocks can be executed in a different order, e.g. **block 172** before **block 170** or **block 176** before **block 174;** some block can be omitted, e.g. where a machine stores a magazine of capsules **block 170** can be omitted; alternatively at **blocks 170** to **176** a user presents the code of the container to the code reading system and after it is read opens said container and dispenses the pre-precursor material into the processing unit. Moreover, the container processing unit may be manually moved between the extraction position and capsule receiving position.

**Blocks 176** and **178** may be referred to a code reading and processing process. **Block 180** may be referred to as the preparation process. The electrical circuitry **16,** includes instructions, e.g. as program code, for the preparation process (or a plurality thereof). In an embodiment the processor **52** implements the instructions stored on a memory (not illustrated).

As part of the preparation process, the electrical circuitry **16** can obtain additional preparation information via the computer network **12** from the server system **8** and/or peripheral device **10** using a communication interface (not illustrated) of the machine.

### [Code general description]

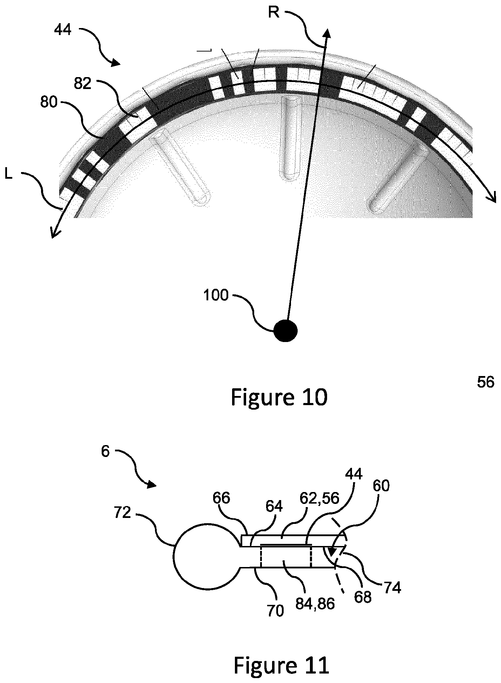

Referring to figure 10, the code **44** is formed of a plurality of elements **80.** The elements **80** are arranged on a surround **82.** The elements **80** are a dark colour (e.g. including one of the following: black, dark blue, purple, dark green) and the surround **82** is a comparatively light colour (e.g. including one of the following: white, light blue, yellow, light green) such that there is sufficient contrast for the image capturing unit **46** to distinguish therebetween. In variant embodiments, which are not illustrated: the elements are a light colour and the surround is a dark colour.

The elements **80** are formed by printing e.g. by means of an ink printer. As an example of printing the ink may be conventional printer ink and the substrate may be the closing member or a separate substrate, which is connected to the container. In variant embodiments, which are not illustrated, the elements are alternatively formed, including by embossing, engraving or other suitable means.

The elements **80** have various shapes as will be discussed. As used herein the term "shape" in respect of the elements may refer to an exact shape or an approximation of the actual shape, which can occur to a printing or other manufacturing variations in precision.

The elements **80** are arranged to be read sequentially when the container is rotated about an axis of rotation **100** (as also illustrated in figure 5). The elements **80** of the code **44** are arranged on a circumferentially extending virtual line L.

### [Code encoding]

The elements **80** encode a data portion for storing the preparation information, and encode a finder sequence for locating the data portion. The elements **80** are encoded as a bit code, wherein the absence or presence of an element encodes a logical 1 or a 0.

The finder sequence (not illustrate) comprises a predefined reserved sequence of logical 1s and/or 0s, which is identifiable when processing the code. The data sequence is arranged at a known position with respect to the finder sequence, e.g. immediately after or distributed within the finder sequence. Hence with the finder sequence located, the data sequence can then be located read and decoded. The data sequence may be decoded based on a rule stored on the electrical circuitry **16** (e.g. via electronic memory) of the machine **2.** A specific example of such a code is provide in EP 2594171 A1.

### [Container formation]

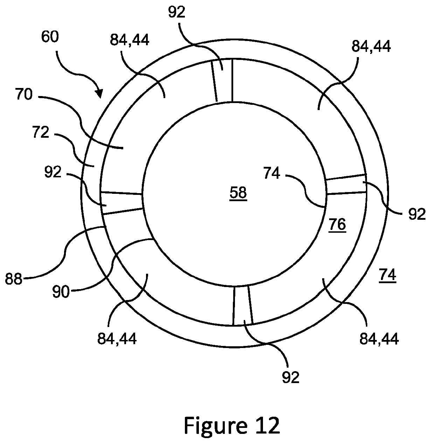

Referring to figures 11 and 12, which is a more detailed example that implements the features discussed in association with the embodiments of figure 8 and 10.

The container **6** comprises a code carrying member **62,** which in the embodiment is the membrane **56.** The membrane **56** includes a flange facing side **64** and an exterior facing side **66.** The flange **60** includes an upper surface **68** and a lower surface **70.** The flange **60** includes an outer rim **72** and an inner edge **74** that adjoins the storage portion **58.** The code **44** is formed on the flange facing side **64** of the membrane **56** at a position that overlaps the upper surface **68** of the flange **60.**

In variant embodiments, which are not illustrated, the code carrying member is a separate member to the membrane, e.g. it is arranged on a separate insert which is positioned between the membrane and flange.

The flange **60** includes a viewing window **84.** The code carrying member **62** is arranged to extend over the viewing window **84** such that the code **44** is readable from a side of the flange **60** that comprises the lower surface **70** through the viewing window **84.**

The viewing window is formed four cut-outs **86.** The cut-outs **86** are bounded by: an outer circumferentially extending edge **88;** an inner circumferentially extending edge **90;** and connecting members **92.** The connecting members **92** interconnect the outer rim **72** to an inner edge **74.**

The connecting members **92** and code **44** are arranged such that an individual repetition of each code is visible through a single cut-out **86.**

In variant embodiments, which are not illustrated: the connecting member can form a portion of the code, e.g. the connecting member may be formed of a material with a surface finish to correspond to a dark or light colour of an element and may be dimension to correspond to an element, and; more than one code repetition may be arranged per viewing windows or a single code repetition may be distributed across several viewing windows; although four cut-outs are shown may be any number of cut-outs.

To maintain a hermetic seal around the cut-outs **86,** the membrane **56** is adhered to the flange **60** radially inwards of the or each cut-out **86,** e.g. around the inner edge **74.** Alternatively, the membrane **56** is adhered to the flange **60** around the perimeter of each cut-out **86** and proximal the outer rim **72.**

In variant embodiments, which are not illustrated, the cut outs are filled with a transparent member, e.g. Perspex, by an adhesive, through which the code can be read.

In variant embodiments, which are not illustrated, entire flange is formed of the transparent member, e.g. Perspex. By forming the entire flange (including optionally the storage portion too) the cut-outs may be obviated.

A method of forming a container **6** comprises the following steps:
**Step 1:** arranging a code carrying member **62** over the upper surface **68** of the flange **60.**
**Step 2:** positioning the code **44** of the code carrying member **62** so that the code **44** is readable through the viewing window **8** from a side of the flange **60** that comprises a lower surface **70.**
**Step 3:** connecting the membrane **56** to the flange **60** with an adhesive.

In variant embodiments, the code can be formed on the code carrying member after step 3 by printing through the viewing window. In this way it may be ensured that the code is aligned in the correct position with respect to the viewing window.

It will be appreciated that any of the disclosed methods (or corresponding apparatuses, programs, data carriers, etc.) may be carried out by either a host or client, depending on the specific implementation (i.e. the disclosed methods/apparatuses are a form of communication(s), and as such, may be carried out from either 'point of view', i.e. in corresponding to each other fashion). Furthermore, it will be understood that the terms "receiving" and "transmitting" encompass "inputting" and "outputting" and are not limited to an RF context of transmitting and receiving radio waves. Therefore, for example, a chip or other device or component for realizing embodiments could generate data for output to another chip, device or component, or have as an input data from another chip, device or component, and such an output or input could be referred to as "transmit" and "receive" including gerund forms, that is, "transmitting" and "receiving", as well as such "transmitting" and "receiving" within an RF context.

As used in this specification, any formulation used of the style "at least one of A, B or C", and the formulation "at least one of A, B and C" use a disjunctive "or" and a disjunctive "and" such that those formulations comprise any and all joint and several permutations of A, B, C, that is, A alone, B alone, C alone, A and B in any order, A and C in any order, B and C in any order and A, B, C in any order. There may be more or less than three features used in such formulations.

In the claims, any reference signs placed between parentheses shall not be construed as limiting the claim. The word 'comprising' does not exclude the presence of other elements or steps then those listed in a claim. Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles. Unless stated otherwise, terms such as "first" and "second" are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

Unless otherwise explicitly stated as incompatible, or the physics or otherwise of the embodiments, example or claims prevent such a combination, the features of the foregoing embodiments and examples, and of the following claims may be integrated together in any suitable arrangement, especially ones where there is a beneficial effect in doing so. This is not limited to only any specified benefit, and instead may arise from an "ex post facto" benefit. This is to say that the combination of features is not limited by the described forms, particularly the form (e.g. numbering) of the example(s), embodiment(s), or dependency of the claim(s). Moreover, this also applies to the phrase "in one embodiment", "according to an embodiment" and the like, which are merely a stylistic form of wording and are not to be construed as limiting the following features to a separate embodiment to all other instances of the same or similar wording. This is to say, a reference to 'an', 'one' or 'some' embodiment(s) may be a reference to any one or more, and/or all embodiments, or combination(s) thereof, disclosed, within the scope of the claims. Also, similarly, the reference to "the" embodiment may not be limited to the immediately preceding embodiment.

As used herein, any machine executable instructions, or compute readable media, may carry out a disclosed method, and may therefore be used synonymously with the term method, or each other.

The foregoing description of one or more implementations provides illustration and description, but is not intended to be exhaustive or to limit the scope of the invention to the precise form disclosed. Modifications and variations are possible in light of the above teachings or may be acquired from practice of various implementations of the present disclosure.

### LIST OF REFERENCES

**2** System
**4** Machine
   **14** Processing unit
      **20** Container processing unit (first/second example)
         **32** Extraction unit
         **34** Capsule holding portion
         **36** Closing portion
         **38** Injection head
         **40** Beverage outlet
         **33** Rotation mechanism
            **37** Drive system
      **22** Fluid conditioning system
         **24** Reservoir
         **26** Pump
         **28** Heat exchanger
         **30** Outlet
      **42** Loose material processing unit
   **16** Electrical circuitry
      **48** Control electrical circuitry
      **50** Input unit
      **52** Processor **54** Feedback system
   **18** Code reading system
      **46** Image capturing unit
**6** Container (Capsule)
   **56** Closing member (membrane)
      **64** Lower surface
      **66** Upper surface
   **58** Storage portion
   **60** Flange portion
      **68** Upper surface
      **70** Lower surface
      **72** Peripheral edge (Rim)
      **88** Outer edge
      **90** Interior edge
      **84, 86** Viewing window (cut-out)
      **92** Connection portion
   **44** Code
      **80** Elements
      L Virtual line
      **82** Surround
   **100** Axis
   **R** Radial direction
**8** Server system
**10** Peripheral device
**12** Computer network

## Claims

1. A container (20) arranged for containing a precursor material for use with a machine (4) for preparing a beverage and/or foodstuff, the container comprising:
a storage portion (58);
a closing member (56);
a flange (60) that comprises an upper surface (68) that interconnects the storage portion and the closing member, the storage portion extending
in a depth direction from the flange;
a machine-readable code (44) storing preparation information for use with a preparation process performed by said machine, and;
a code carrying member (62),
**characterized in that** the flange comprises a viewing window (84, 86),
the code carrying member extends over the viewing window at a side of the flange that comprises the upper surface of the flange, and the code arranged on a flange facing surface of the code carrying member,
wherein the code is readable through the viewing window from a side of the flange that comprises a lower surface (70) of the flange, and the lower surface is arranged at a greater depth than the upper surface of the flange, in the depth direction of extension of the storage portion.

2. The container of claim 1, wherein:
the closing member and the code carrying member are integrally formed, or;
the code carrying member is arranged as an insert.

3. The container of either of claims 1 or 2, wherein the viewing window is formed as one or more cut outs(86).

4. The container of claim 3, wherein the or each cut-out is adjoined by a connecting member (92) that interconnects a peripheral rim of the flange to an interior edge of the flange.

5. The container of claim 4, wherein the connecting member forms a portion of the code.

6. The container of any of claims 3 to 5, wherein the closing member is adhered to the flange radially inwards of the or each cut-out.

7. The container of either of claims 1 or 2, wherein the viewing window comprises an at least partially transparent member.

8. The container of claim 7, wherein the entire flange is formed from the at least partially transparent member.

9. The container of any preceding claim, wherein the flange and storage portion are integrally formed of the same material.

10. A system comprising the container of any of claims 1 to 9 and a machine for preparing a beverage and/or foodstuff, the machine including:
a code reading system (18) to read the code of the container;
a processing unit (14) for processing the precursor material of the container, and; electrical circuitry (16) to control the processing unit based on preparation information read from the code.

11. Use of the container of any of claims 1 to 9 for a machine for preparing a beverage and/or foodstuff or a precursor thereof, the machine including:
a code reading system to read the code of the container;
a processing unit for processing the precursor material of the container, and;
electrical circuitry to control the processing unit based on preparation information read from the code.

12. A method of forming a container for containing a precursor material for use with a machine for preparing a beverage and/or foodstuff, the method comprising:
arranging a code carrying member on a side of a flange that comprises an upper surface of the flange that interconnects a storage portion and a closing member, such that the code is readable through a viewing window in the flange from a side of the flange that comprises a lower surface of the flange, wherein the storage portion extends in a depth direction from the flange, and the lower surface is arranged at a greater depth than the upper surface of the flange in the depth direction of extension of the storage portion.

13. The method of claim 12 comprising forming the code on the closing member prior to connecting the closing member to the storage portion.

14. The method of claim 12 comprising forming the code on an insert before arranging the insert on the side of the flange that comprises the upper surface of the flange.

15. A container formed by the method of any of claims 12 to 14.

## Patentansprüche

1. Behälter (20), der zum Aufnehmen eines Vorläufermaterials zur Verwendung mit einer Maschine (4) zum Zubereiten eines Getränks und/oder Nahrungsmittels eingerichtet ist, der Behälter umfassend:
einen Aufbewahrungsabschnitt (58);
ein Verschlusselement (56);
einen Flansch (60), der eine obere Oberfläche (68) umfasst, die den Aufbewahrungsabschnitt und das Verschlusselement miteinander verbindet, wobei sich der Aufbewahrungsabschnitt in einer Tiefenrichtung von dem Flansch erstreckt;
einen maschinenlesbaren Code (44), der Zubereitungsinformationen zur Verwendung bei einem Zubereitungsprozess, der durch die Maschine durchgeführt wird, aufbewahrt, und;
ein Codeträgerelement (62), **dadurch gekennzeichnet, dass** der Flansch ein Sichtfenster (84, 86) umfasst, wobei sich das Codeträgerelement über das Sichtfenster an einer Seite des Flansches erstreckt, die die obere Oberfläche des Flansches umfasst, und der Code auf einer dem Flansch zugewandten Oberfläche des Codeträgerelements eingerichtet ist,
wobei der Code durch das Sichtfenster hindurch von einer Seite des Flansches lesbar ist, die eine untere Oberfläche (70) des Flansches umfasst, und die untere Oberfläche, in der Tiefenrichtung einer Erstreckung des Aufbewahrungsabschnitts, in einer größeren Tiefe als die obere Oberfläche des Flansches eingerichtet ist.

2. Behälter nach Anspruch 1, wobei:
das Verschlusselement und das Codeträgerelement einstückig ausgebildet sind oder;
das Codeträgerelement als ein Einsatz eingerichtet ist.

3. Behälter nach einem der Ansprüche 1 oder 2, wobei das Sichtfenster als eine oder mehrere Aussparungen (86) ausgebildet ist.

4. Behälter nach Anspruch 3, wobei sich an die oder jede Aussparung ein Verbindungselement (92) anschließt, das einen Umfangsrand des Flansches mit einer Innenkante des Flansches verbindet.

5. Behälter nach Anspruch 4, wobei das Verbindungselement einen Abschnitt des Codes ausbildet.

6. Behälter nach einem der Ansprüche 3 bis 5, wobei das Verschlusselement radial innerhalb der oder jeder Aussparung an den Flansch angehaftet ist.

7. Behälter nach einem der Ansprüche 1 oder 2, wobei das Sichtfenster ein mindestens teilweise transparentes Element umfasst.

8. Behälter nach Anspruch 7, wobei der gesamte Flansch aus dem mindestens teilweise transparenten Element ausgebildet ist.

9. Behälter nach einem der vorstehenden Ansprüche, wobei der Flansch und der Aufbewahrungsabschnitt aus dem gleichen Material einstückig ausgebildet sind.

10. System, umfassend den Behälter nach einem der Ansprüche 1 bis 9 und eine Maschine zum Zubereiten eines Getränks und/oder Nahrungsmittels, wobei die Maschine einschließt:
ein Codelesesystem (18), um den Code des Behälters zu lesen;
eine Verarbeitungseinheit (14) zum Verarbeiten des Vorläufermaterials des Behälters und;
elektrische Schaltlogik (16), um die Verarbeitungseinheit basierend auf Zubereitungsinformationen, die aus dem Code gelesen werden, zu steuern.

11. Verwendung des Behälters nach einem der Ansprüche 1 bis 9 für eine Maschine zum Zubereiten eines Getränks und/oder Nahrungsmittels oder eines Vorläufers davon, wobei die Maschine einschließt:
ein Codelesesystem, um den Code des Behälters zu lesen;
eine Verarbeitungseinheit zum Verarbeiten des Vorläufermaterials des Behälters und;
elektrische Schaltlogik, um die Verarbeitungseinheit basierend auf Zubereitungsinformationen, die aus dem Code gelesen werden, zu steuern.

12. Verfahren zum Ausbilden eines Behälters zum Aufnehmen eines Vorläufermaterials zur Verwendung mit einer Maschine zum Zubereiten eines Getränks und/oder Nahrungsmittels, das Verfahren umfassend:
Einrichten eines Codeträgerelements auf einer Seite eines Flansches, die eine obere Oberfläche des Flansches umfasst, die einen Aufbewahrungsabschnitt und ein Verschlusselement derart miteinander verbindet, dass der Code durch ein Sichtfenster in dem Flansch hindurch von einer Seite des Flansches lesbar ist, die eine untere Oberfläche des Flansches umfasst,
wobei sich der Aufbewahrungsabschnitt in einer Tiefenrichtung von dem Flansch erstreckt und die untere Oberfläche in der Tiefenrichtung der Erstreckung des Aufbewahrungsabschnitts in einer größeren Tiefe als die obere Oberfläche des Flansches eingerichtet ist.

13. Verfahren nach Anspruch 12, umfassend das Ausbilden des Codes auf dem Verschlusselement vor einem Verbinden des Verschlusselements mit dem Aufbewahrungsabschnitt.

14. Verfahren nach Anspruch 12, umfassend das Ausbilden des Codes auf einem Einsatz vor dem Einrichten des Einsatzes auf der Seite des Flansches, die die obere Oberfläche des Flansches umfasst.

15. Behälter, der durch das Verfahren nach einem der Ansprüche 12 bis 14 ausgebildet ist.

## Revendications

1. Récipient (20) conçu pour contenir un matériau précurseur pour utilisation avec une machine (4) pour la préparation d'une boisson et/ou d'une denrée alimentaire, le récipient comprenant :
une partie de stockage (58) ;
un élément de fermeture (56) ;
une bride (60) qui comprend une surface supérieure (68) qui relie entre eux la partie de stockage et l'élément de fermeture, la partie de stockage s'étendant dans un sens de la profondeur à partir de la bride ;
un code lisible par machine (44) stockant des informations de préparation pour utilisation avec un processus de préparation effectué par ladite machine, et ;
un élément porteur de code (62), **caractérisé en ce que** la bride comprend une fenêtre d'observation (84, 86), l'élément porteur de code s'étend sur la fenêtre d'observation au niveau d'un côté de la bride qui comprend la surface supérieure de la bride, et le code est disposé sur une surface de l'élément porteur de code faisant face à la bride,
dans lequel le code est lisible à travers la fenêtre d'observationdepuis un côté de la bride qui comprend une surface inférieure (70) de la bride, et la surface inférieure est disposée à une profondeur plus importante que la surface supérieure de la bride, dans dans le sens de la profondeur d'extension de la partie de stockage.

2. Récipient selon la revendication 1, dans lequel :
l'élément de fermeture et l'élément porteur de code sont formés d'un seul tenant, ou ;
l'élément porteur de code est disposé comme un insert.

3. Récipient selon l'une ou l'autre des revendications 1 ou 2, dans lequel la fenêtre d'observation est formée comme une ou plusieurs découpes (86).

4. Récipient selon la revendication 3, dans lequel la ou chaque découpe est adjointe à un élément de liaison (92) qui relie un bord périphérique de la bride à un bord intérieur de la bride.

5. Récipient selon la revendication 4, dans lequel l'élément de liaison forme une partie du code.

6. Récipient selon l'une quelconque des revendications 3 à 5, dans lequel l'élément de fermeture est collé à la bride radialement vers l'intérieur de la ou de chaque découpe.

7. Récipient selon l'une ou l'autre des revendications 1 ou 2, dans lequel la fenêtre d'observation comprend un élément au moins partiellement transparent.

8. Récipient selon la revendication 7, dans lequel l'ensemble de la bride est formé par l'élément au moins partiellement transparent.

9. Récipient selon l'une quelconque revendication précédente, dans lequel la bride et la partie de stockage sont formées d'un seul tenant du même matériau.

10. Système comprenant le récipient selon l'une quelconque des revendications 1 à 9 et une machine pour la préparation d'une boisson et/ou d'une denrée alimentaire, la machine comportant :
un système de lecture de code (18) pour lire le code du récipient ;
une unité de traitement (14) permettant de traiter le matériau précurseur du récipient, et ;
un ensemble de circuits électriques (16) pour commander l'unité de traitement sur la base d'informations de préparation lues à partir du code.

11. Utilisation du récipient selon l'une quelconque des revendications 1 à 9 pour une machine de préparation d'une boisson et/ou d'une denrée alimentaire ou d'un précurseur de celles-ci, la machine comportant :
un système de lecture de code pour lire le code du récipient ;
une unité de traitement permettant de traiter le matériau précurseur du récipient, et ;
un ensemble de circuits électriques pour commander l'unité de traitement sur la base d'informations de préparation lues à partir du code.

12. Procédé de formation d'un récipient permettant de contenir un matériau précurseur pour utilisation avec une machine de préparation d'une boisson et/ou d'une denrée alimentaire, le procédé comprenant :
la disposition d'un élément porteur de code sur un côté d'une bride qui comprend une surface supérieure de la bride qui relie entre eux une partie de stockage et un élément de fermeture, de telle sorte que le code est lisible à travers une fenêtre d'observation dans la bride à partir d'un côté de la bride qui comprend une surface inférieure de la bride,
dans lequel la partie de stockage s'étend dans un sens de la profondeur à partir de la bride, et la surface inférieure est disposée à une profondeur plus importante que la surface supérieure de la bride dans le sens de la profondeur d'extension de la partie de stockage.

13. Procédé selon la revendication 12, comprenant la formation du code sur l'élément de fermeture avant de relier l'élément de fermeture à la partie de stockage.

14. Procédé selon la revendication 12, comprenant la formation du code sur un insert avant de disposer l'insert sur le côté de la bride qui comprend la surface supérieure de la bride.

15. Récipient formé par le procédé selon l'une quelconque des revendications 12 à 14.
